## Europäisches Patentamt
## European Patent Office
## Office européen des brevets

(19)

(11) Numéro de publication : **0 065 124 B2**

(12) # NOUVEAU FASCICULE DE BREVET EUROPEEN

(45) Date de publication du nouveau fascicule du brevet : **07.10.92 Bulletin 92/41**

(51) Int. Cl.⁵ : **B23B 27/14**

(21) Numéro de dépôt : **82103476.6**

(22) Date de dépôt : **24.04.82**

(54) **Plaquette de coupe pour usinage par enlèvement de copeaux.**

(30) Priorité : **19.05.81 CH 3246/81**

(43) Date de publication de la demande :
**24.11.82 Bulletin 82/47**

(45) Mention de la délivrance du brevet :
**19.06.85 Bulletin 85/25**

(45) Mention de la décision concernant
l'opposition :
**07.10.92 Bulletin 92/41**

(84) Etats contractants désignés :
**AT BE DE FR GB IT LU NL SE**

(56) Documents cités :
**DE-A- 2 400 544**
**FR-A- 2 158 983**
**US-A- 4 214 846**
**Coromant Extra Post, SANDVIK, Coromant**
**Tools, 1973**

(73) Titulaire : **STELLRAM S.A.**
**Route de l'Etraz**
**CH-1260 Nyon, Vaud (CH)**

(72) Inventeur : **Bonjour, Christian**
**17, Chemin de Prélaz**
**CH-1260 Nyon, Vaud (CH)**
Inventeur : **Hauser, Charles**
**En Nuyerattes**
**CH-1261 Genolier, Vaud (CH)**

(74) Mandataire : **Micheli, Michel-Pierre et al**
**MICHELI & CIE, Rue de Genève 122, Case**
**Postale 61**
**CH-1226 Genève-Thonex (CH)**

EP 0 065 124 B2

## Description

La présente invention concerne des plaquettes de coupe pour usinage par enlèvement de copeaux comportant au moins une arête de coupe, un nez et un brise-copeaux. Ces plaquettes de coupe sont de préférence indexables et peuvent présenter une forme carrée, triangulaire, rhombique ou autre.

Il est connu que les plaquettes utilisées pour la coupe, ou pour l'usinage par enlèvement de copeaux, de pièce métalliques ou autres, doivent être munies de brisecopeaux, exécutés généralement sous la forme de rainures le long des arêtes de coupe, afin de favoriser le contrôle desdits copeaux. Toutefois, les exigences actuelles concernant le contrôle des copeaux et notamment leur fragmentation, pour faciliter d'une part l'évacuation desdits copeaux et pour augmenter d'autre part la sécurité d'emploi des outils, obligent à étudier les outils dans leur globalité, afin de satisfaire à ces exigences et, de plus, de diminuer la consommation d'énergie au cours du travail desdits outils. Il est également connu que ce brise-copeaux peut être de largeur variable et comporter dans sa section transversale une ou plusieurs parties, droites ou incurvées, variables en fonction de leur position le long de l'arête de coupe.

Dans le brevet FR 2 323 476, une plaquette de coupe du type précité est décrite, et qui comporte en outre un renforcement de la partie normalement libre du tranchant au moyen d'une facette négative, afin d'augmenter l'efficacité du brisecopeaux, les forces de coupe et la résistance du tranchant.

Toutefois, l'amélioration des caractéristiques ci-dessus n'est qu'un aspect de l'efficacité globale de la plaquette de coupe. Par conséquent, le but de cette invention consiste à fournir une plaquette de coupe du type précité qui présente les caractéristiques fonctionnelles optimales dans le plus grand domaine d'utilisation possible, c'est-àdire, des profondeurs, des avances, des vitesses et de la matière, en cours d'usinage.

L'objet de la présente invention, visant à atteindre le but précité, consiste en une plaquette de coupe pour usinage par enlèvement de copeaux comportant au moins une arête de coupe, un nez et un brise-copeaux, ainsi qu'un listel périphérique, entre l'arête de coupe et le brise-copeaux, caractérisé par le fait que le listel est d'une largeur constante et qu'il passe progressivement d'un angle de coupe positif sur le nez et/ou à proximité de celui-ci à un angle de coupe nul ou négatif le long de l'arête de coupe, de telle manière que ledit listel présente une configuration vrillée.

Le dessin annexé illustre schématiquement et à titre d'exemple l'invention.

La figure 1 est une vue partielle en perspective d'une réalisation d'un plaquette de coupe selon l'invention.

La figure 2 est une vue de dessus de la réalisation de la figure 1.

Les figures 3, 4 et 5 sont des vues en coupe selon les lignes I-I, II-II et III-III, respectivement de la figure 2.

La figure 6 représente une courbe en sac théorique.

La figure 7 représente deux courbes en sac superposées obtenues respectivement pour une plaquette de coupe selon l'invention et pour une plaquette standard.

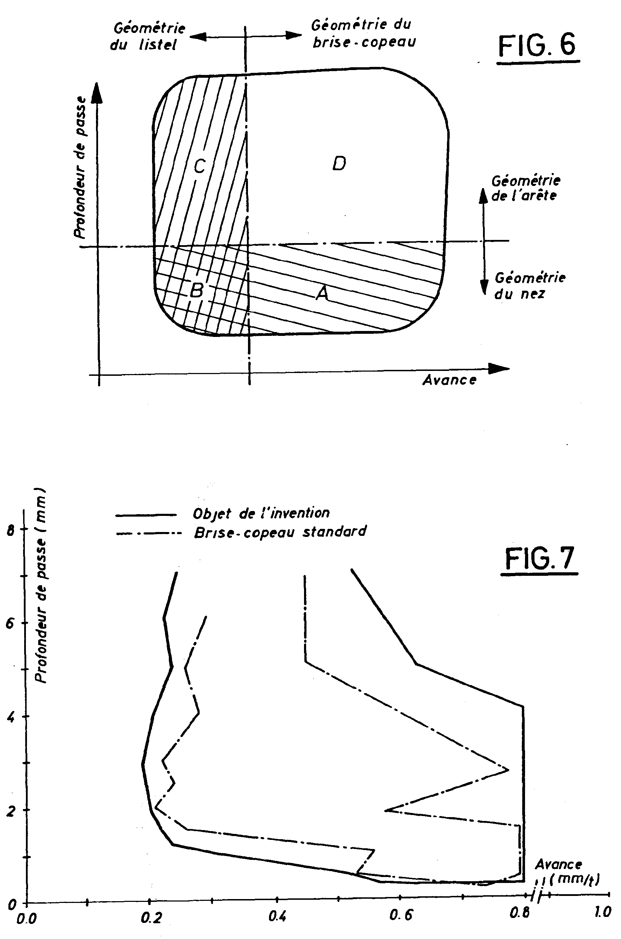

Le domaine d'utilisation d'une plaquette est défini par ce que l'on appelle une courbe en sac, qui est un domaine dans l'espace des profondeurs de passe, des avances et des vitesses, généralement mesuré à vitesse constante, à l'intérieur duquel la plaquette fragmente et contrôle le copeau correctement. Ce domaine, tel que défini sur la figure 6, peut être divisé en quatre sous-domaines principaux, chacun de ces sous-domaines étant contrôlé et généré principalement par une des parties de la plaquette. On peut donc établir une relation bi-univoque entre le domaine des profondeurs et des avances et l'espace géométrique de la plaquette. La meilleure géométrie de plaquette sera celle qui définira l'espace le plus vaste dans le domaine des profondeurs de passe et des avances.

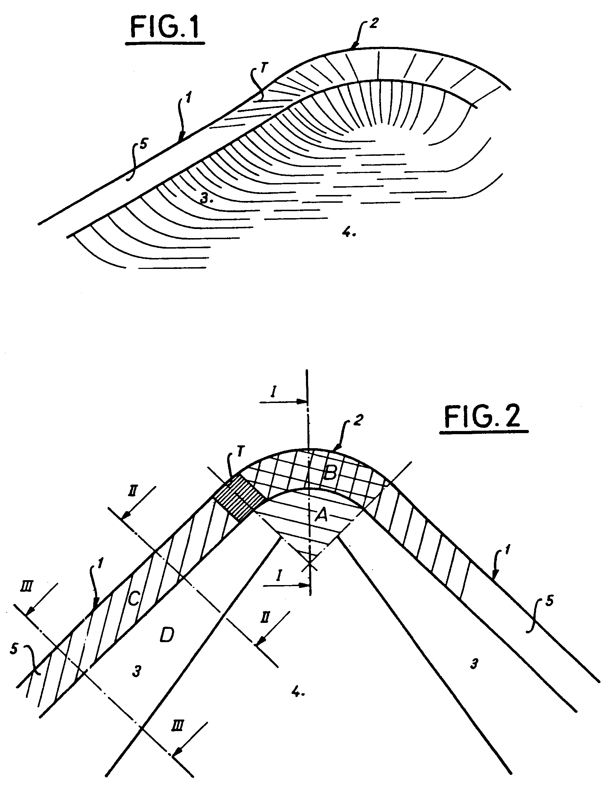

En référence aux figures 1 et 2 du dessin annexé, la partie de plaquette de coupe illustrée comporte une arête de coupe 1 présentant des portions rectilignes et une portion arrondie formant un bec ou nez 2, ainsi qu'un brise-copeaux 3 formé le long de l'arête de coupe 1 par les pentes latérales d'une dépression centrale 4. Entre les brise-copeaux 3 et l'arête de coupe 1 est situé un listel 5, ici de largeur constante sur le pourtour de la plaquette. En ce qui concerne la figure 2, les zones A, B, C et D correspondent aux zones respectives définies par la courbe en sac de la figure 6.

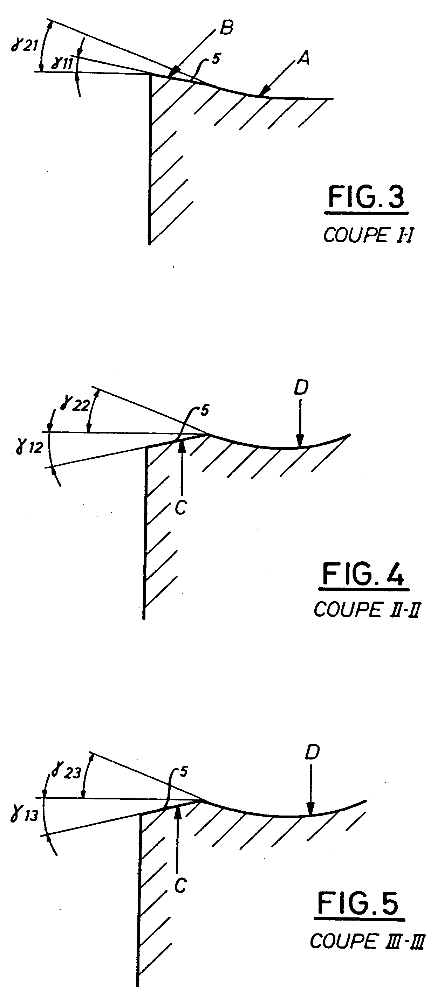

Comme illustré sur la figure 1 et conformément à l'invention, le listel 5 présente un angle de coupe positif sur le nez 2 de la plaquette et une zone de transition T où l'angle de coupe passe progressivement à une valeur négative que présente l'arête de coupe 1. Le passage d'un angle positif à un angle négatif confère ainsi au listel 5 une allure vrillée. Le changement d'angle de coupe est également illustré sur les figures 3 à 5 représentant des coupes au niveau du nez 2, du début de l'arête de coupe 1 et du milieu de celle-ci, respectivement.

Enfin, de préférence, comme illustré sur les coupes des figures 3 et 4, le second angle de coupe $Y_{21}$ dans le domaine A est plus faible que le second angle de coupe $Y_{22}$ dans le domaine D, ou éventuellement égal à celui-ci.

Les caractéristiques précitées vont généralement à l'encontre de celles communément admises jusqu'à présent et qui incitaient notamment à concevoir des zones B et C ayant des angles $Y_{11}$, $Y_{12}$ et $Y_{13}$ égaux,

soit négatifs, soit nuls et des zones A et D ayant des angles $Y_{21}$, $Y_{22}$ et $Y_{23}$ soit égaux, soit de valeurs décroissantes depuis la zone A.

L'étude des diverses zones de la plaquette selon l'invention, et de leur influence dans le domaine des profondeurs de passe et des avances sur la fragmentation, a montré que d'une part un angle $Y_{11}$ positif est favorable à la fragmentation et que d'autre part le fait que celui-ci soit positif n'entraîne pas nécessairement une fragilisation de la plaquette, la valeur de l'angle positif pouvant être comprise entre 0 et 10°. De plus, le domaine B doit être caractérisé de préférence par un angle $Y_{11}$ assez important, ceci en raison de l'inclinaison de la plaquette sur le porte-outil.

En ce qui concerne l'arête de coupe, le domaine C, lui, doit présenter des angles $Y_{12}$ et $Y_{13}$ nuls ou négatifs alors que $Y_{11}$ est positif. Le passage entre $Y_{11}$ et $Y_{12}$ se fait de manière continue. On aura donc en quelque sorte un domaine B-C de transition, présentant une surface gauche.

En ce qui concerne les angles $Y_{22}$ et $Y_{23}$, ils peuvent être soit égaux, soit $Y_{23}$ plus petit que $Y_{22}$. Toutefois, l'angle $Y_{22}$ doit être égal soit supérieur à l'angle $Y_{21}$ du domaine A. Ceci est précisé toujours en fonction des relations entre chacun des domaines et de leur représentation de fragmentation dans l'espace des profondeurs de passe et des avances.

Ceci conduit donc à une plaquette ayant les conditions angulaires suivantes:

$$Y_{22}-Y_{21} \geq 0$$
$$Y_{22}-Y_{23} \geq 0$$
$$Y_{12} \leq 0 \text{ si } Y_{11} 0$$
$$Y_{13} \leq 0 \text{ si } Y_{11} 0$$

En outre, pour augmenter encore l'efficacité de la plaquette en ce qui concerne les différents paramètres, les caractéristiques selon l'invention peuvent être superposées à un angle d'inclinaison de l'arête de coupe, afin de compenser l'inclinaison de la plaquette sur le porte-outil; la valeur de cet angle peut être comprise entre 0 et 10° le nez restant lui-même à 0°.

L'augmentation du domaine d'utilisation obtenu grâce à une plaquette de coupe selon l'invention est illustrée sur la figure 7, représentant les courbes en sac obtenues d'une par avec une plaquette standard et d'autre part avec une plaquette selon l'invention. La zone externe entre les deux courbes constitue la portion de domaine élargi.

Enfin, la plaquette de coupe selon l'invention peut également être munie d'un talon décroissant en direction du centre de la plaquette, tel que décrit dans la demande de brevet européen publiée EP 0 066 091, au nom de la même titulaire, afin d'augmenter encore le domaine D de la courbe en sac.

**Revendications**

1. Plaquette de coupe pour usinage .par enlèvement de copeaux comportant au moins une arête de coupe (1), un nez (2) et un brise-copeaux (3), ainsi qu'un listel périphérique (5), entre l'arête de coupe et le brise-copeaux, caractérisé par le fait que le listel est d'une largeur constante et qu'il passe progressivement d'un angle de coupe ($\gamma$ 11) positif sur le nez et/ou à proximité de celui-ci à un angle de coupe nul ou négatif ($\gamma$ 12,13) le long de l'arête de coupe, de telle manière que ledit listel présente une configuration vrillée.

2. Plaquette de coupe selon la revendication 1, caractérisée par le fait que l'angle d'attaque ou second angle de coupe ($\gamma$ 21) dans la région du nez est plus faible ou égal au second angle de coupe ($\gamma$ 22) le long des arêtes de coupe.

3. Plaquette de coupe selon la revendication 1 ou la revendication 2, caractérisée par le fait que l'arête de coupe présente un angle d'inclinaison compris entre 0 et 10°.

**Patentansprüche**

1. Schneidplatte zur spanabhebenden Bearbeitung, mit zumindest einer Schneidkante (1), einer Nase (2) und einem Spanbrecher (3), sowie einer peripherischen Fase (5) zwischen der Schneidkante und dem Spanbrecher, dadurch gekennzeichnet, dass die Fase gleichbleibende Breite hat, und dass sie progressiv von einem positiven Schneidwinkel ($\gamma$ 11) auf der Nase und/oder in deren Nähe zu einem gleich Null oder negativen Schneidwinkel entlang der Schneidkante übergeht, sodass die benannte Fase eine gebohrte Gestaltung aufweist.

2. Schneidplatte nach Anspruch 1, dadurch gekennzeichnet, dass der Spanwinkel oder zweite Schneidwinkel ($\gamma$ 21) im Bereich der Nase kleiner oder gleich dem zweiten Schneidwinkel ($\gamma$ 22) entlang der Schneidkanten ist.

3. Schneidplatte nach Anspruch 1 oder Anspruch 2, dadurch gekennzeichnet, dass die Schneidkante eine Neigung zwischen 0 und 10° hat.

**Claims**

1. Cutter bit for machining by chip removal comprising at least one cutting edge (1), a nose (2) and a chip-breaker (3), as well as a peripheral fillet (5), between the cutting edge and the chip-breaker, characterized by the fact that the fillet has a constant width, and that it passes progressively from a positive cutting angle ($\gamma$ 11) on the nose and/or near this latter to a zero or a negative cutting angle ($\gamma$ 12, 13) along the cutting edge, in such a manner that said fillet has a twisted configuration.

2. Cutter bit according to claim 1, characterized by the fact that the rake on second cutting angle ($\gamma$ 21) in the region of the nose is smaller than or equal to the second cutting angle ($\gamma$ 22) along the cutting edges.

3. Cutter bit according to claim 1 or claim 2, characterized by the fact that the cutting edge has an inclination angle comprised between 0 to 10°.

## FIG.1

## FIG.2

FIG. 3

COUPE I-I

FIG. 4

COUPE II-II

FIG.5

COUPE III-III

6

FIG. 6

FIG.7